# EUROPEAN PATENT SPECIFICATION

(11) **EP 0 551 669 B1**
(45) Date of publication and mention of the grant of the patent: **04.09.1996**
(21) Application number: 92203483.0
(22) Date of filing: 13.11.1992
(51) Int. Cl.: B29D 30/20, B29D 30/32

(54) **Method for building a radial tyre on a flat drum**
Verfahren zum Herstellen eines Radialreifens auf einer flachen Trommel
Procédé de fabrication d'un pneu radial sur un tambour plat

(30) Priority: 13.01.1992 NL 9200046
(43) Date of publication of application: 21.07.1993
(73) Proprietor: VELUWSE MACHINE INDUSTRIE B.V., NL-8161 RK Epe (NL)
(72) Inventor: Steusel, Leo, NL-8171 XG Vaassen (NL); De Graaf, Martin, NL-8166 KM Emst (NL)
(74) Representative: Kooy, Leendert Willem

(56) References cited:
- US-A- 3 784 426
- US-A- 3 919 024
- US-A- 4 181 168

## Description

The invention relates to a method for building a carcass for a radial tyre on a flat building drum, the building drum comprising a central part, two movable parts which are movable towards one another on either side of the central part, two slidable end parts coupled to the movable parts, all these parts having essentially cylindrical surfaces with a common centre line, and two inflatable bellows each supported by its corresponding end part, and being provided with radially expandable locking parts in order to radially press layers which form the carcass and are placed thereon, up to bead rings intended for the carcass so as to secure the bead rings, while the outer diameter of these locking parts is smaller than the inner diameter of the bead rings, so as to be able to expand, and wherein the carcass is built up of one or more coating layers, one or more carcass layers, two planing strips, two sidewall strips and the two bead rings, the planing strips being made of squarish meshed fabric bedded in rubber. Such a method is known from US-A-4,181,168.

A radial tyre is commonly known and is built up of many components, whereby a number of methods are known for making radial tyres using these many components. One of these methods is constructing the carcass on a carcass drum, that is one or more coating layers, one or more carcass layers, two bead rings, two planing strips, two side strips and possibly other components are made up into a carcass. In addition to this two or more belt layers and a tread are constructed into a unit on another drum, which is subsequently placed around the carcass.

The carcass drum can be a so-called flat building drum for building a carcass for a radial tyre. In the case of a flat building drum, the cylindrical surface of the drum has an essentially constant diameter, so that the axial cross-section can be denoted by a straight line and thus appears to be flat.

In the case of a flat building drum all the strips and layers which form the carcass for a radial tyre are put on one after the other, that is two planing strips, two sidewall strips, one or more coating layers and one or more carcass layers. Here the outer diameter of the outer layer of this set of layers is smaller than the inner diameter of the bead rings, so that the bead rings are coaxially movable along the drum to their places with respect to the layers that have been applied thereon. After that these layers are pressed radially up against the bead rings in order to secure them by radially expanding locking parts of the flat drum, the diameter of the locking parts nevertheless remaining smaller than the inner diameter of the bead rings, so that consequently no shoulders are formed. Next, the side strips of the layers which protract past the bead rings to the ends of the drum, are wrapped around the bead rings and the carcass is brought into a toroidal shape, after which a set of belt layers and a tread are applied. The trouble with this is that folds can occur in the sidewall strips of the layers wrapped around the bead rings. A flat drum does however have a number of important advantages, which is to be discussed in due course, when building carcasses for radial tyres.

Two sorts of carcass drums can be used for the construction of a carcass for a radial tyre, in the manner described above, that is to say a shoulder drum or a so-called flat drum. For the sake of clarity, both drums will be described hereafter in the specification of the invention on the basis of drawings. We will now confine ourselves to the information that carcasses for radial tyres can certainly be made on a shoulder drum, but that folds ensue when building on a flat drum in the turned up parts of the layers forming the carcass at the bead rings, particularly if the planing strips are made of squarish meshed fabric bedded in rubber.

The invention aims at making the application of a flat building drum possible without folds ensuing in the layers forming the carcass near the bead rings, when utilizing planing strips made of squarish meshed fabric bedded in rubber.

For this purpose the invention provides in a first aspect a method as defined in the opening paragraph, characterized in that said method comprises subsequently the steps of:
a) placing each side wall strip on its corresponding inflatable bellows, each placed side wall strip comprising a first and a second edge portion, said first side wall edge portion being situated closer to the central part of the flat building drum than the second side wall edge portion;
b) placing each planing strip on its corresponding side wall strip and inflatable bellows, each placed planing strip comprising a first and a second edge portion, said first planing strip edge portion being situated closer to the central part of the flat building drum than the second planing strip edge portion, the second planing strip edge portion of each planing strip covering the first side wall edge portion of its corresponding side wall strip;
c) placing the one or more coating layers around the flat building drum, said one or more placed coating layers comprising two edge portions on either side of the central part of the flat building drum, each coating layer edge portion covering its corresponding planing strip at least over its first planing strip edge portion; said one or more coating layers covering the movable and central parts of the flat building drum;
d) placing the one or more carcass layers around the flat building drum, said one or more placed carcass layers comprising two edge portions on either side of the central part of the flat building drum, each carcass layer edge portion covering its corresponding side wall strip partly; said one or more carcass layers covering the planing strips and the one or more coating layers; and
e) placing each bead ring around its corresponding planing strip.

The invention furthermore provides in a second aspect a method as defined in the opening paragraph, characterized in that said method comprises subsequently the steps of:
a) placing each side wall strip on its corresponding inflatable bellows, each placed side wall strip comprising a first and a second edge portion, said first side wall edge portion being situated closer to the central part of the flat building drum than the second side wall edge portion;
b) placing the one or more coating layers between the side wall strips on the central and movable parts of the flat building drum, said one or more placed coating layers comprising two edge portions on either side of the central part of the flat building drum, each coating layer edge portion being spaced from its corresponding side wall strip;
c) placing each planing strip on its corresponding side wall strip and inflatable bellows, each placed planing strip comprising a first and a second edge portion, said first planing strip edge portion being situated closer to the central part of the flat building drum than the second planing strip edge portion, the second planing strip edge portion of each planing strip covering the first side wall edge portion of its corresponding side wall strip; the first planing strip edge portion covering its corresponding coating layer edge portion;
d) placing the one or more carcass layers around the flat building drum, said one or more placed carcass layers comprising two edge portions on either side of the central part of the flat building drum, each carcass layer edge portion covering its corresponding side wall strip partly; said one or more carcass layers covering the planing strips and the one or more coating layers; and
e) placing each bead ring around its corresponding planing strip.

Special methods for the implementation of the invented methods described above are stated in the accompanying sub-claims.

The invention will be clarifyed in the following description of the examples shown in the drawings, in which:
figure 1 shows a schematic axial cross-section of a part of a shoulder drum;
figure 2 shows a schematic radial cross-section of a shoulder drum;
figure 3 schematically shows the building of a carcass for a radial tyre on a shoulder drum according to figure 1 and 2;
figure 4 shows an axial cross-section of a bead portion of the carcass that is built in the way indicated in figure 3;
figure 5 shows a schematic axial cross-section of a part of a flat drum;
figure 6 shows the building of a carcass for a radial tyre on a flat drum according to figure 5;
figure 7 shows an axial cross-section of a bead portion of the carcass built in the way indicated in figure 6;
figure 8 shows an axial cross-section of a bead portion as in figure 7, but without planing strip;
figure 9 shows the composition of the material from which a planing strip is made;
figure 10 shows an axial cross-section of a first example of a bead portion of a carcass for a radial tyre, the bead portion being without folds and the carcass being built on a flat drum in a method likewise indicated in figure 10, said method being the first subject matter of the invention;
figure 11 shows an axial cross-section of a second example of a bead portion of a carcass for a radial tyre, the bead portion being without folds and the carcass being built on a flat drum in a method likewise described in figure 11, said method being the second subject matter of the invention.

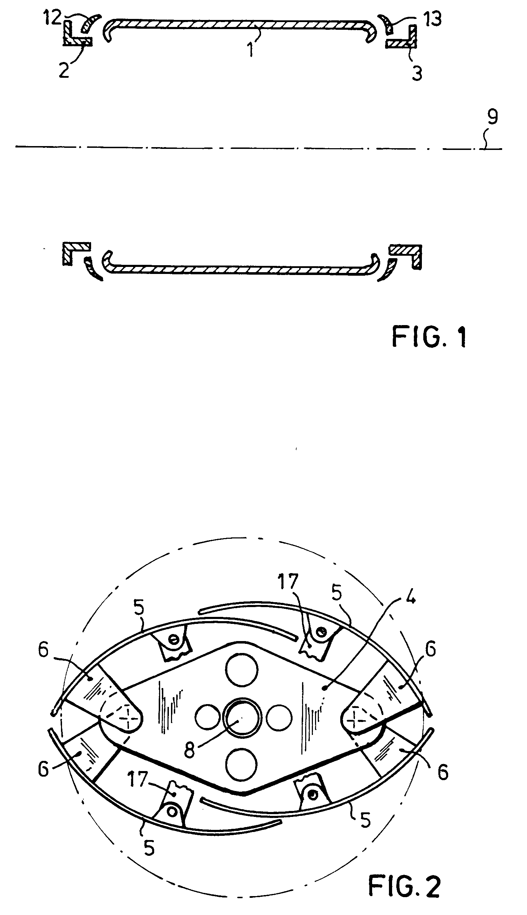

Figure 1 gives an axial cross-section of a part of a shoulder drum. A shoulder drum is generally known, so that we confine ourselves to a description of parts of the shoulder drum necessary for explaining the invention. In the case of a shoulder drum, there is at each end of the actual drum 1 a mounting fixture 2 and 3 respectively for a bead ring, all these parts forming, under normal circum stances, cylindrical surfaces with respect to the centre line 9 of the shoulder drum. Drum 1 is composed of segments 5 in their retracted position represented in figure 2 in radial cross-section by continuous lines. In this method each segment 5 is connected in a swivelling way by means of an arm 6 to a support 4 fixed to a shaft 8 of which the centre line 9 is indicated in figure 1. By means of a theoretically known mechanism with levers 17 the segments 5 can be swivelled to their normal position as indicated by dotted lines in figure 2, the segments together forming a cylindrical surface. Instead of four segments 5 the number of segments can also be larger. A shoulder drum of this kind is generally known, so that a description of the mechanism for retracting and then protracting the segments is superfluous.

The only important matter here is that the outer diameter of the shoulder drum with retracted segments 5 is smaller than the inner diameter of the bead rings, so that the bead rings can easily be moved by the mounting fixtures 2 and 3 to their desired positions with respect to the drum and coaxially against it. After that the segments 5 are protracted again until they form a cylindrical surface together (indicated in figure 2 by dotted lines), the outer diameter of which is larger than the inner diameter of the bead rings 12 and 13. A situation of this kind is represented in figure 1, drum 1 having a larger diameter than the inner diameter of the bead rings 12 and 13 and of the mounting fixtures 2 and 3.

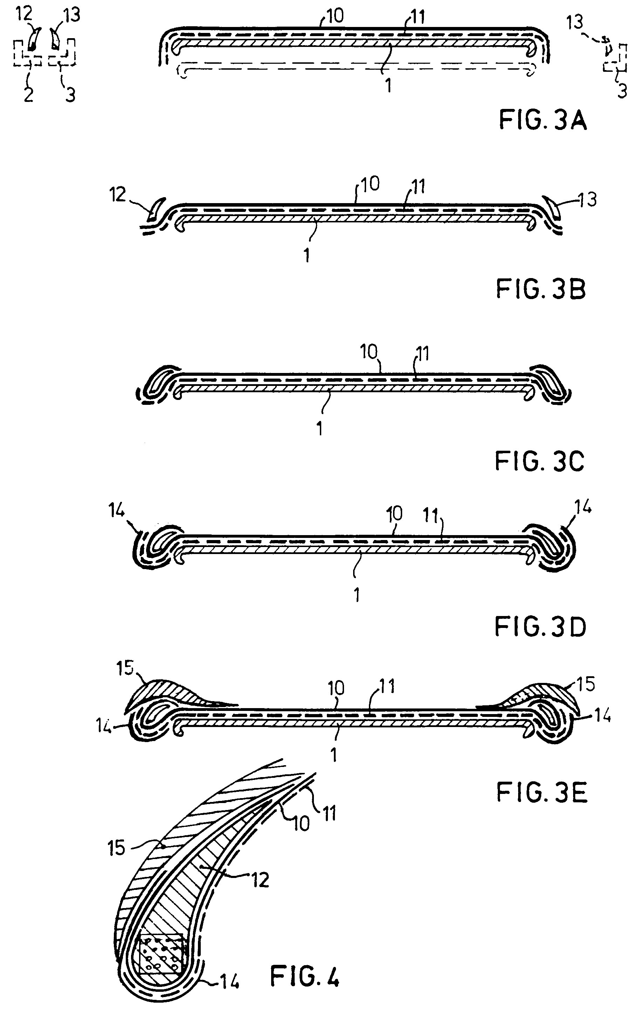

Figure 3 schematically represents the construction of a carcass for a radial tyre on a shoulder drum. In order to save space figure 3 is based on the upper part of figure 1 above the centre line 9, it being clear that the part below the centre line is symmetrical to the part above the centre line and this also applies to figure 3. According to figure 3A, shoulder drum 1 is initially cylindrical as a result of the protracted segments 5. Then the segments are retracted, so that the diameter of drum 1 is reduced to the position indicated with dotted lines in figure 3A. By doing so the mounting fixture 3 with the right-hand bead rings 13 is transferable to the right to the position indicated by dotted lines in figure 3A. After that the segments 5 are again swivelled to their protracted positions, so that shoulder drum 1 again takes up the position indicated by continuous lines in figure 3A. Next the sets of coating layers 11 and of carcass layers 10 are applied successively and are curved downwards at the ends of the drum.

Subsequently the left bead ring 12 is slid to the right into the position indicated in figure 3B and the right bead ring 13 to the left into the position indicated in figure 3B. Then the sets of coating layers 11 and of carcass layers 10 are curved in the usual way around the bead rings 12 and 13 as indicated in figure 3C. After that a planing strip 14 is applied to each bead ring 12 and 13 as in figure 3D, each planing strip being curved radially from the widest point on its diameter to the narrowest point on its diameter towards the inside of the bead ring interior. Then, according to figure 3E, a sidewall strip 15 is placed at each bead ring. Subsequently the carcass formed in this way and consisting of the layers 10 and 11, the bead rings 12 and 13 and the strips 14 and 15 is removed in the known way whilst reducing the cross-section of drum 1 by retracting the segments 5. Then the carcass is brought into toroidal shape on another apparatus, after which the application of the belt layers and the tread takes place. In figure 4 the left bead portion of a completed carcass is represented on a larger scale than in figure 3 and so again shows bead ring 12 with the carcass layer set 10, the coating layer set 11, the planing strip 14 and the sidewall strip 15 curved around it, whereby the set of carcass layers 10 and of coating layers 11 can consist of one or more layers.

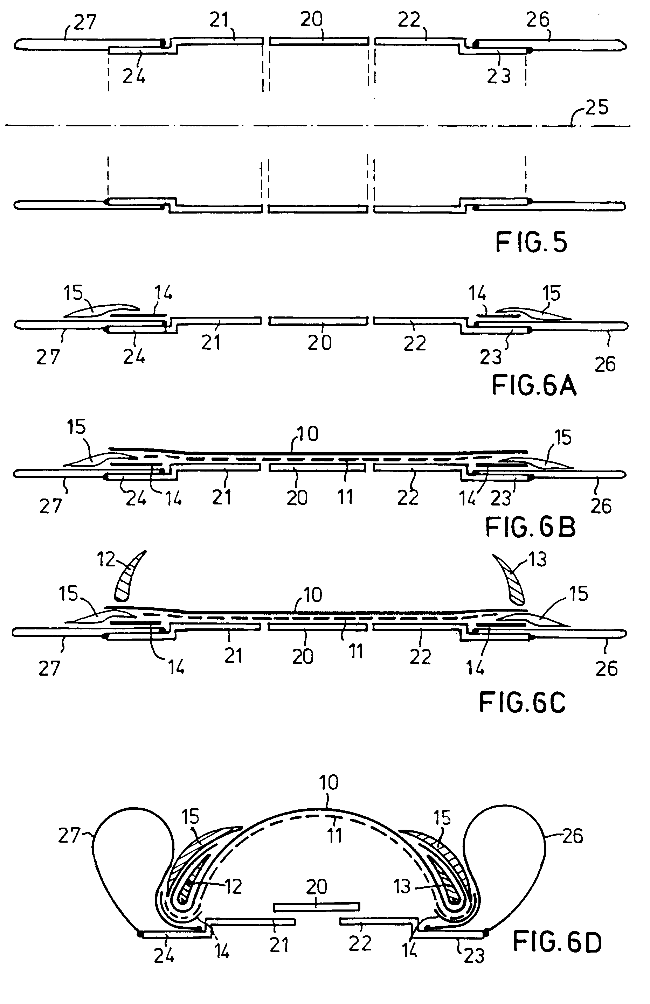

Instead of the shoulder drum relating to figures 1, 2, and 3 described above, a so-called flat building drum for building a carcass for a radial tyre can be applied. A flat building drum has an essentially constant cross-section, whereas a shoulder drum 1 (as discussed above and shown in figure 1) is provided with retractable segments to be able to reduce the diameter. The surface of a flat building drum shows an almost straight line in axial cross-section, from which the specification "flat" results, because obviously the drum is not flat but cylindrical. In figure 5 a flat building drum is represented in a very schematic way. The flat building drum consists of a central part 20 and two parts 21 and 22 which are movable towards one another and coupled to two slidable end parts 23 and 24, all these parts normally having essentially cylindrical surfaces with the joint centre line 25. Each end part 23 and 24 supports an inflatable bellows 26 and 27 respectively. In the following description of the construction of a carcass reference is made to figure 6, which is based only on the upper part of figure 5 to save space, it being clear that the part below the centre line 25 in figure 5 is symmetrical to the part above the centre line and that this also applies to figure 6.

First of all a left-hand and a right-hand planing strip 14 as in figure 6A are placed on the flat drum, this being in contrast with the building of carcasses for radial tyres on a shoulder drum, where the planing strips are applied after the coating layers, the carcass layers and the bead rings as indicated in connection with figure 3. After first having placed the planing strips, a left-hand and a right-hand sidewall strip 15 are then applied according to figure 6A. Subsequently one or more coating layers 11 and then one or more carcass layers 10 are applied according to figure 6B. The bead rings 12 and 13 are then positioned as in figure 6C and finally, by inflating the bellows 26 and 27, parts of the above-mentioned layers and strips as in figure 6D are curved around the bead rings 12 and 13 and the layer set is brought into toroidal shape by changing the cross-section of the centre part 20 and then sliding the slidable parts 21 and 22 of the flat drum towards one another. This is all common knowledge and therefore only represented in the form of a diagram.

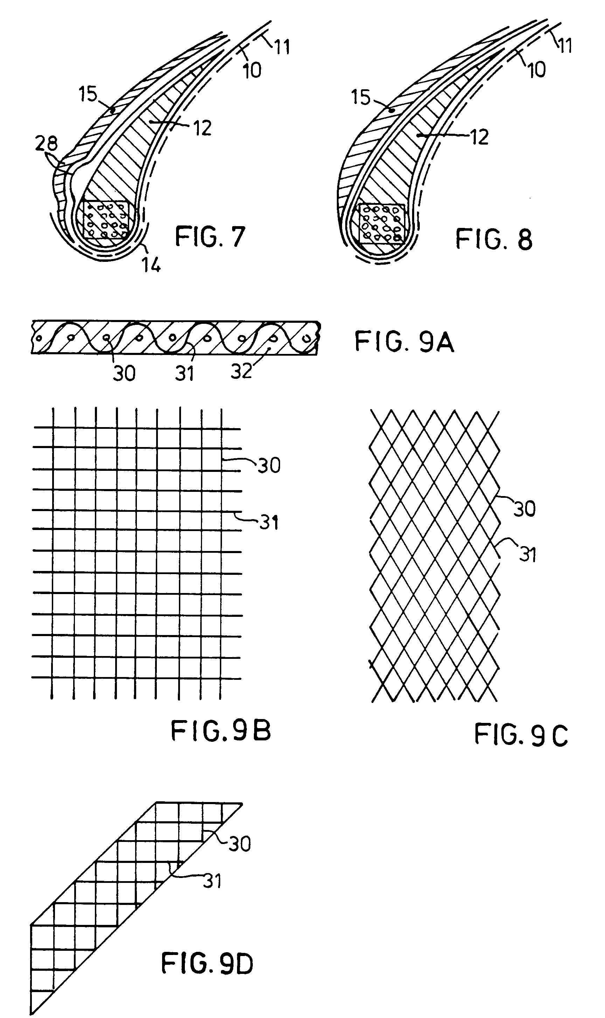

It is desirable that the planing strip 14 should consist of a core of woven threads 30 and 31 in a rubber mass 32 as indicated in cross-section in figure 9A by way of example. As seen from above in figure 9B the warp and weft threads can be at right angles to each other and can, in relation to each other, occupy angles smaller than 90° by stretching during the forming of a carcass according to figure 9C. All threads 30 and 31 can be made up of one or more fibres. The planing strips 14 are cut obliquely out of a piece of material, as for example seen from above in figure 9D . This is all commonly known, so that further explanation is superfluous. When building on a flat drum the planing strips should be elastic both in length as well as in width whilst maintaining the curved form in axial cross-section defined by the bead ring. For that purpose the cutting angle is preferably 45° as in figure 9D, but a cutting angle between 35° and 55° is possible to allow for choice in the breadth of the planing strip.

With a shoulder drum as in figure 3, each planing strip 14 is placed first of all on the part with the largest diameter, therefore near the edge of the carcass layer 10 situated on the bead ring 12 or 13 in figure 3C and the planing strip 14 is then curved radially inwards around the carcass layer into the shape shown in figure 3D.

It is a problem that, when building a carcass for a radial tyre on a flat drum in the way indicated in figure 6 that when a planing strip 14, as described above, made of squarely meshed fabric bedded in rubber, is used, folds 28 occur in the carcass layer 10 and in the sidewall strip 15 as in figure 7. When the planing strip 14 is omitted, it is remarkable that no folds occur as indicated in figure 8. The invention intends to prevent the forming of folds by nevertheless using planing strips 14 of squarely meshed fabric bedded in rubber according to figure 9d. After all, a planing strip is necessary to protect the layers behind it, that is protecting the carcass layer 10 and, if present, also the coating layer 11, against wear by sliding with regard to the wheel rim on which the tyre is mounted.

Preventing the forming of folds when using a flat drum is of great importance because carcasses for radial tyres can be built at a greater speed on flat drums than on shoulder drums. Time is after all lost when the segments 5 of a shoulder drum 1 as in figure 3A are retracted so that the bead ring 13 is subsequently transferred coaxially along the centre part 1 of the shoulder drum, while yet more time is lost when the segments 5 are then again protracted into a cylindrical shape so as to form shoulders, according to figure 3B, for supporting and fastening the bead rings 12 and 13. Time is also lost when the segments 5 are retracted in order to be able to then remove the completed carcass from the shoulder drum.

A second advantage of a flat drum as opposed to a shoulder drum is, that in the case of a shoulder drum the carcass layers 10 and the coating layers 11 should be curved over the edges of the centre part according to figure 3B, each of the edges forming a shoulder, before the beads 12 and 13 can be positioned, whereas in the case of flat drum, as in figure 6C, the bead rings 12 and 13 can easily be placed around the layers 11 and 10 and the strips 14 and 15 placed one above the other.

A third advantage of a flat drum as opposed to a shoulder drum is that particularly the planing strips 14 and the sidewall strips 15 are more easily positioned than on a shoulder drum, on which after all each planing strip 14 has to be applied, curved around the bead ring 12 and 13 respectively and around the layers 10 and 11 curved around the bead rings, as in figure 3D, followed by applying the sidewall strips 15 b in a curved way, as in figure 3E.

A fourth advantage of a flat drum as opposed to a shoulder drum is that the components 10, 11, 12, 13, 14, and 15 forming a carcass of a radial tyre can be more exactly put into their correct position with a flat drum than with a shoulder drum. This advantage applies in particular to the planing strip 14, which in the case of a flat drum is applied flatly, in axial cross-section, and can, for that reason, be put more accurately into place. On the contrary, in the case of a shoulder drum the planing strip 14 is applied no sooner than that the beads 12 and 13 respectively have been coated by turned up parts of the coating layers 11 and carcass layers 10 as in figure 3C, so that the planing strip 14 should be applied in a curved way as in figure 3D.

As has already been stated above in figures 6 and 7, a fold 28 occurs in the carcass layer 10 and in the sidewall strip 15 by using squared meshed fabric bedded in rubber, as in figure 9, for the planing strip 14 when building a carcass for a radial tyre on a flat drum. A radial tyre is seriously weakened by a fold of this kind and is consequently not fit for sale. Therefore the invention aims at making the building of a carcass for a radial tyre on a flat drum possible without folds forming, when planing strips made of squared meshed fabric bedded in rubber are used.

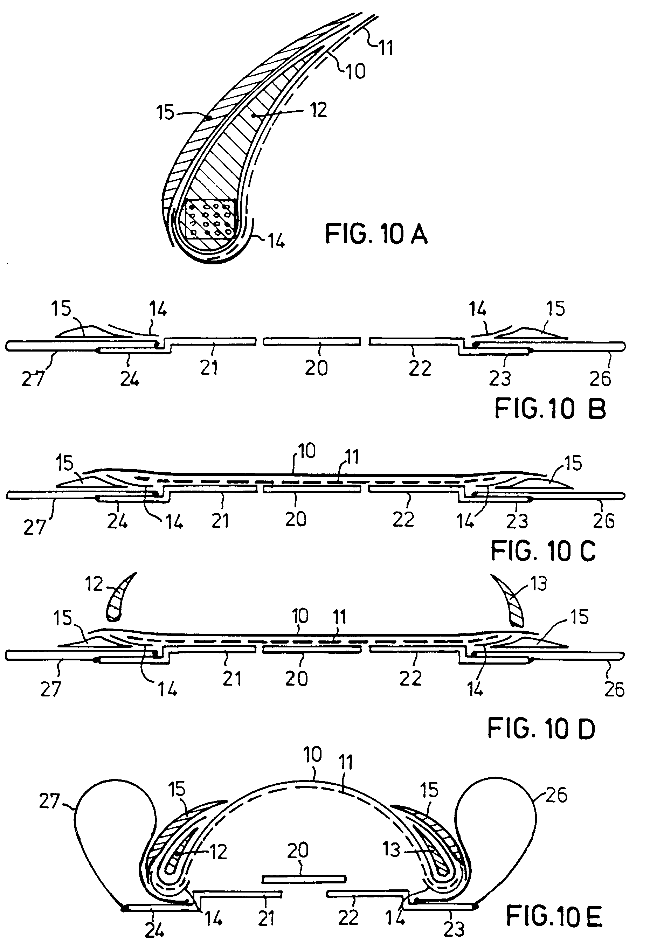

This objective of the invention is achieved, according to a first method as in figure 10, by not allowing the planing strip 14 to end outside the sidewall strip 15 as in figure 7, but allowing the planing strip 14 to end between the sidewall strip 15 and the carcass layers 10 as in figure 10A. Instead of first of all placing the planing strips 14 onto the flat drum and then the sidewall strips 15 as in figure 6A , the sidewall strips 15 should, according to the invention, be placed first and after that the planing strips 14, as in figure 10B. In this method each planing strip overlaps a part of the adjacent sidewall strip. The subsequent construction of the carcass is represented in figures 10C, 10D and 10E in conformity with the description of figures 6B, 6C and 6D and the result is thus represented in figure 10A, in which, as opposed to figure 7, a fold is absent as intended by the invention.

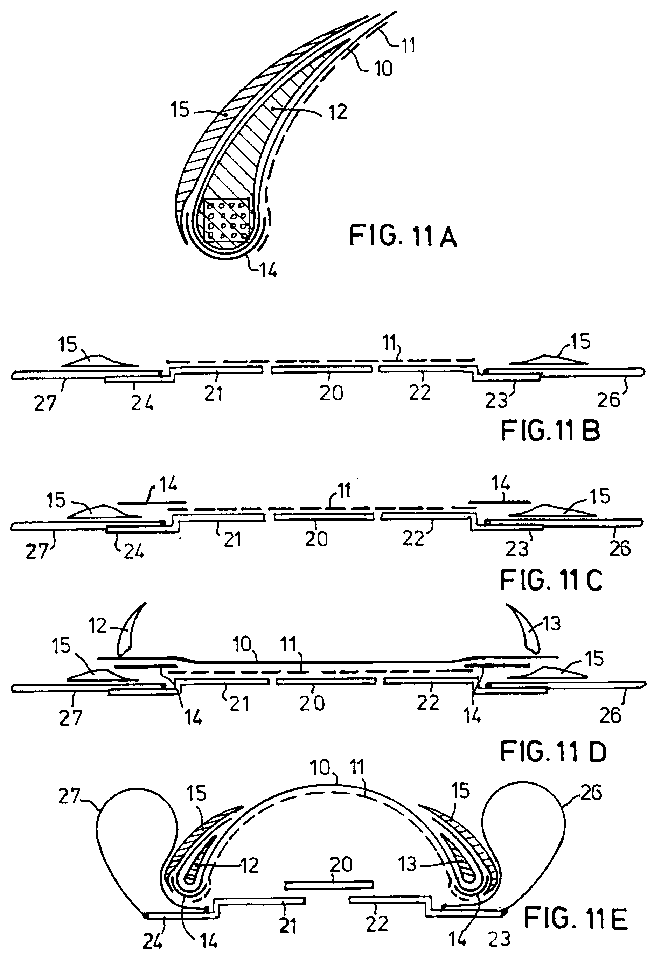

The objective of the invention as described above is achieved, according to a second method as represented in figure 11, by not allowing the planing strip 14 to end outside the sidewall strip 15 and the coating layer 11 as in figure 7, but to place this edge of the planing strip 14 between the sidewall strip 15 and the carcass layers 10 and the other edge of the planing strip 14 between the coating layer 11 and the carcass layers 10 as in figure 11A. To this end, instead of first of all placing the planing strip 14 and then the sidewall strips 15 on the flat drum as in figure 6A , the sidewall strips 15 according to the invention should be placed first of all followed by the coating layers 11 as in figure 11B. In this method the adjacent edges of the sidewall strips 15 and the coating layers 11 are situated at a distance from one another, so that a large gap remains between these edges. In a second phase according to figure 6B the two planing strips 14 are placed in such a way that they cover the gap and the adjacent side strips of the sidewall strips 15 and the coating layers as in figure 11C. The subsequent carcass construction is represented in figures 11D and 11C in conformity with the description of figure 6C, 6D and the result is shown in figure 11, the fold being absent, as opposed to figure 7, as intended by the invention.

It is clear that figures 4, 7, 8, 10A and 11A show axial cross-sections of always the left-hand bead section of a carcass for a radial tyre, the right-hand bead section being mirror symmetrical with regard to the left-hand bead section, so that a drawing of the right-hand bead section is superfluous. It is also clear that the figures 3, 6, 10B-E and 11B-E show axial cross-sections of building drum parts and parts of a carcass for a radial tyre placed thereon, the part of this drum situated below the centre line of the drum and the parts of the carcass placed thereon being omitted for the sake of simplicity because the axial cross-section below the centre line is mirror symmetrical in relation to the axial cross-section above the centre line of the flat drum, as shown in figure 5.

It is moreover clear that the carcass layer 10 and the covering layer 11 can each be made up of either one or two or more component layers.

Finally, it is clear that the planing strip 14 can reach well beyond or just beyond the end edges of the coating layer 11 and of the sidewall strip 15 in figure 10a and 11a.

According to figure 11A the ends of the sidewall strip 15 and the coating layer 11 are at a sufficiently large distance from each other to allow adequate exposure of the planing strip 14 so that it can serve as a protection strip. On the contrary, it is also possible to place the said ends closer together, the strip 14 then serving as finishing strip to make the bead more rigid or less vulnerable to mistakes in flow during vulcanisation of the tyre or less vulnerable when the tyre is mounted onto the rim.

In the method described in relation to figure 10 each of the two planing strips 14 with the adjacent sidewall strip 15 can also be combined into a unit elsewhere and only after this has been done, will the unit then be arranged on the flat drum 20, 21, 22, 23 24, 26 and 27 according to figure 10B.

In the method already described in relation to figure 11, it is also possible to combine both planing strips 14, both sidewall strips 15 and one or more coating layers 11 to form a unit elsewhere and only after this has been done will the unit be arranged on the flat drum 20, 21, 22, 23, 24, 26 and 27 according to figure 11C. This can also be done by means of the method already described in relation to figure 10, in which case the carcass layers 10 as in figure 10C should then be applied after this unit has been arranged on the flat drum.

Moreover, in relation to figure 10, both planing strips 14 and coating layers 11 can also be combined to form a unit elsewhere and after that this unit can be placed on the flat drum 20, 21, 22, 23, 24, 26 and 27, just the two sidewall strips 15 having then been placed on this drum beforehand.

## Claims

1. Method for building a carcass for a radial tyre on a flat building drum, the building drum comprising a central part (20), two movable parts (21, 22) which are movable towards one another on either side of the central part (20), two slidable end parts (23, 24) coupled to the movable parts (21, 22), all these parts having essentially cylindrical surfaces with a common centre line (25), and two inflatable bellows (26, 27) each supported by its corresponding end part (23, 24), and being provided with radially expandable locking parts in order to radially press layers which form the carcass and are placed thereon, up to bead rings (12, 13) intended for the carcass so as to secure the bead rings (12, 13), while the outer diameter of these locking parts is smaller than the inner diameter of the bead rings (12, 13), so as to be able to expand, and wherein the carcass is built up of one or more coating layers (11), one or more carcass layers (10), two planing strips (14), two sidewall strips (15) and the two bead rings (12, 13), the planing strips (14) being made of squarish meshed fabric bedded in rubber, **characterized in that** said method comprises subsequently the steps of:
a) placing each side wall strip (15) on its corresponding inflatable bellows (26, 27), each placed side wall strip (15) comprising a first and a second edge portion, said first side wall edge portion being situated closer to the central part (20) of the flat building drum than the second side wall edge portion;
b) placing each planing strip (14) on its corresponding side wall strip (15) and inflatable bellows (26, 27), each placed planing strip (14) comprising a first and a second edge portion, said first planing strip edge portion being situated closer to the central part (20) of the flat building drum than the second planing strip edge portion, the second planing strip edge portion of each planing strip (14) covering the first side wall edge portion of its corresponding side wall strip (15);
c) placing the one or more coating layers (11) around the flat building drum, said one or more placed coating layers (11) comprising two edge portions on either side of the central part (20) of the flat building drum, each coating layer edge portion covering its corresponding planing strip (14) at least over its first planing strip edge portion; said one or more coating layers (11) covering the movable (21, 22) and central (20) parts of the flat building drum;
d) placing the one or more carcass layers (10) around the flat building drum, said one or more placed carcass layers (10) comprising two edge portions on either side of the central part (20) of the flat building drum, each carcass layer edge portion covering its corresponding side wall strip (15) partly; said one or more carcass layers (10) covering the planing strips (14) and the one or more coating layers (11); and
e) placing each bead ring (12, 13) around its corresponding planing strip (14).

2. Method for building a carcass for a radial tyre on a flat building drum, the building drum comprising a central part (20), two movable parts (21, 22) which are movable towards one another on either side of the central part (20), two slidable end parts (23, 24) coupled to the movable parts (21, 22), all these parts having essentially cylindrical surfaces with a common centre line (25), and two inflatable bellows (26, 27) each supported by its corresponding end part (23, 24), and being provided with radially expandable locking parts in order to radially press layers which form the carcass and are placed thereon, up to bead rings (12, 13) intended for the carcass so as to secure the bead rings (12, 13), while the outer diameter of these locking parts is smaller than the inner diameter of the bead rings (12, 13), so as to be able to expand, and wherein the carcass is built up of one or more coating layers (11), one or more carcass layers (10), two planing strips (14), two sidewall strips (15) and the two bead rings (12, 13), the planing strips (14) being made of squarish meshed fabric bedded in rubber, **characterized in that** said method comprises subsequently the steps of:
a) placing each side wall strip (15) on its corresponding inflatable bellows (26, 27), each placed side wall strip (15) comprising a first and a second edge portion, said first side wall edge portion being situated closer to the central part (20) of the flat building drum than the second side wall edge portion;
b) placing the one or more coating layers (11) between the side wall strips (15) on the central (20) and movable (21, 22) parts of the flat building drum, said one or more placed coating layers (11) comprising two edge portions on either side of the central part (20) of the flat building drum, each coating layer edge portion being spaced from its corresponding side wall strip;
c) placing each planing strip (14) on its corresponding side wall strip (15) and inflatable bellows (26, 27), each placed planing strip (14) comprising a first and a second edge portion, said first planing strip edge portion being situated closer to the central part (20) of the flat building drum than the second planing strip edge portion, the second planing strip edge portion of each planing strip (14) covering the first side wall edge portion of its corresponding side wall strip (15); the first planing strip edge portion covering its corresponding coating layer edge portion;
d) placing the one or more carcass layers (10) around the flat building drum, said one or more placed carcass layers (10) comprising two edge portions on either side of the central part (20) of the flat building drum, each carcass layer edge portion covering its corresponding side wall strip (15) partly; said one or more carcass layers (10) covering the planing strips (14) and the one or more coating layers (11); and
e) placing each bead ring (12, 13) around its corresponding planing strip (14).

3. Method according to claim 1, **characterized in that** each of the two side wall strips (14) are combined with the adjacent planing strip (15) to form a unit and this unit is subsequently arranged on the flat building drum.

4. Method according to one of the previous claims, **characterized in that** both planing strips (14), both sidewall strips (15) and one or more coating layers (11) are combined to form a unit and this unit is then arranged on the flat building drum.

5. Method according to claim 1, **characterized in that** both planing strips (14) and one or more coating layers (11) are combined to form a unit and this unit is subsequently arranged on the flat building drum.

6. Method according to claim 2 or 4, **characterized in that** in between the edge portion of each coating layer (11) and the respective sidewall strip (15) a gap is left over, so that the planing strip (14) in question is sufficiently exposed to operate as such.

7. Method according to claim 2 or 4, **characterized in that** the edge portion of each coating layer (11) and of the respective sidewall strip (15) are placed so close to one another, that the planing strip (14) functions as finishing edge.

8. Method according to one of the previous claims, **characterized in that** the planing strips (14) are cut at an angle of 45° in relation to the squarish meshed fabric bedded in rubber.

9. Method according to one of the previous claims, **characterized in that** the extent of elasticity in the length or breadth of the planing strips (14) can be selected so as to apply extra narrow or wide strips by cutting the planing strips (14) at an angle ranging from 35° to 55° in relation to the fabric bedded in rubber with initially squarish meshes.

## Patentansprüche

1. Verfahren zum Bauen einer Karkasse für einen Radialreifen auf einem flachen Bautrommel, wobei der Bautrommel einen Zentralteil (20), zwei bewegbaren Teile (21, 22), die zueinander hin beidseitig des Zentralteils (20) bewegbar sind, zwei gleitbare Endteile (23, 24) die mit den bewegbaren Teilen (21, 22) gekoppelt sind, enthält, wobei alle diese Teile im wesentlichen zylindrischen Oberflächen mit einer gemeinsamen Mittellinie (25) haben, und zwei aufblasbare Blasebalgen (26, 27) jeder durch seinen entsprechenden Endteil (23, 24) abgestützt, und mit radial dehnbaren Sperrteilen versehen, um Schichten, die die Karkasse bilden und darauf hingelegt werden, bis zu Wulstringen (12, 13) die für die Karkasse beabsichtigt sind um die Wulstringe (12, 13) zu befestigen, radial zu drücken, während der äußere Durchmesser dieser Sperrteile kleiner ist als der innere Durchmesser der Wulstringe (12,13) um dehnen zu können, und wobei die Karkasse aus einem oder mehreren Überzugsschichten (11), aus einer oder mehreren Karkassenschichten (10), zwei Hobelstreifen (14), zwei Seitenwandstreifen (15) und den beiden Wulstringen (12, 13) aufgebaut ist, wobei die Hobelstreifen (14) aus viereckigem, in Gummi eingebettetem Maschenstoff hergestellt sind, **dadurch gekennzeichnet**, daß dieses Verfahren nacheinander die folgenden Schritte enthält:
a) das Anbringen jedes Seitenwandstreifens (15) auf seinem entsprechenden aufblasbaren Blasebalgen (26, 27), wobei jeder angebrachte Seitenwandstreifen (15) einen ersten und einen zweiten Randteil enthält, wobei der erste Seitenwandrandteil näher als der zweite Seitenwandrandteil an dem Zentralteil (20) des flachen Bautrommels aufgestellt ist;
b) das Anbringen jedes Hobelstreifens (14) auf seinem entsprechendem Seitenwandstreifen (15) und aufblasbaren Blasebalgen (26, 27), wobei jeder angebrachte Hobelstreifen (14) einen ersten und einen zweiten Randteil enthält, wobei der erste Hobelstreifenrandteil näher als der zweite Hobelstreifenrandteil an dem Zentralteil (20) des flachen Bautrommels aufgestellt ist, wobei der Zweite Hobelstreifenrandteil jedes Hobelstreifens (14) den ersten Seitenwandrandteil seines entsprechenden Seitenwandstreifens (15) bedeckt;
c) das Anbringen der einen oder mehreren Überzugsschichten (11) um den flachen Bautrommel, wobei die eine oder mehrere angebrachte Überzugsschichten (11) zwei Randteile beidseitig des Zentralteils (20) des flachen Bautrommels enthalten, wobei jeder Überzugsschichtrandteil seinen entsprechenden Hobelstreifen (14) zumindest über seinen ersten Hobelstreifenrandteil bedeckt; wobei die eine oder mehrere Überzugsschichten (11) die bewegbaren (21, 22) und zentralen (20) Teilen des flachen Bautrommels bedecken;
d) das Anbringen der einen oder mehreren Karkassenschichten (10) um den flachen Bautrommel, wobei die eine oder mehrere angebrachte Karkassenschichten (10) zwei Randteile beidseitig des Zentralteils (20) des flachen Bautrommels enthalten, wobei jeder Karkassenschichtrandteil seinen entsprechenden Seitenwandstreifen (15) zum Teil bedeckt; wobei die eine oder mehrere Karkassenschichten (10) die Hobelstreifen (14) und die eine oder mehrere Überzugsschichten bedecken; und
e) das Anbringen jedes Wulstringes (12, 13) um seinen entsprechenden Hobelstreifen (14).

2. Verfahren zum Bauen einer Karkasse für einen Radialreifen auf einem flachen Bautrommel, wobei der Bautrommel einen Zentralteil (20), zwei bewegbaren Teile (21, 22), die zueinander hin beidseitig des Zentralteils (20) bewegbar sind, zwei gleitbare Endteile (23, 24) die mit den bewegbaren Teilen (21, 22) gekoppelt sind, enthält, wobei alle diese Teile im wesentlichen zylindrischen Oberflächen mit einer gemeinsamen Mittellinie (25) haben, und zwei aufblasbare Blasebalgen (26, 27) jeder durch seinen entsprechenden Endteil (23, 24) abgestützt, und mit radial dehnbaren Sperrteilen versehen, um Schichten, die die Karkasse bilden und darauf hingelegt werden, bis zu Wulstringen (12, 13) die für die Karkasse beabsichtigt sind um die Wulstringe (12, 13) zu befestigen, radial zu drücken, während der äußere Durchmesser dieser Sperrteile kleiner ist als der innere Durchmesser der Wulstringe (12,13) um dehnen zu können, und wobei die Karkasse aus einem oder mehreren Überzugsschichten (11), aus einer oder mehreren Karkassenschichten (10), zwei Hobelstreifen (14), zwei Seitenwandstreifen (15) und den beiden Wulstringen (12, 13) aufgebaut ist, wobei die Hobelstreifen (14) aus viereckigem, in Gummi eingebettetem Maschenstoff hergestellt sind, **dadurch gekennzeichnet**, daß dieses Verfahren nacheinander die folgenden Schritte enthält:
a) das Anbringen jedes Seitenwandstreifens (15) auf seinem entsprechenden aufblasbaren Blasebalgen (26, 27), wobei jeder angebrachte Seitenwandstreifen (15) einen ersten und einen Zweiten Randteil enthält, wobei der erste Seitenwandrandteil näher als der zweite Seitenwandrandteil an dem Zentralteil (20) des flachen Bautrommels aufgestellt ist;
b) das Anbringen der einen oder mehreren Überzugsschichten (11) zwischen den Seitenwandstreifen (15) auf die zentralen (20) und bewegbaren (21, 22) Teile des flachen Bautrommels, wobei die eine oder mehrere angebrachten Überzugsschichten (11) zwei Randteilen beidseitig des Zentralteils (20) des flachen Bautrommels enthalten, wobei jeder Überzugsrandteil räumlich getrennt von seinem entsprechenden Seitenwandstreifen angebracht ist;
c) das Anbringen jedes Hobelstreifens (14) auf seinem entsprechendem Seitenwandstreifen (15) und aufblasbaren Blasebalgen (26, 27), wobei jeder angebrachte Hobelstreifen (14) einen ersten und einen zweiten Randteil enthält, wobei der erste Hobelstreifenrandteil näher als der zweite Hobelstreifenrandteil an dem Zentralteil (20) des flachen Bautrommels aufgestellt ist, wobei der zweite Hobelstreifenrandteil jedes Hobelstreifens (14) den ersten Seitenwandrandteil seines entsprechenden Seitenwandstreifens (15) bedeckt; wobei der erste Hobelstreifenrandteil seinen entsprechenden Überzugsschichtrandteil bedeckt;
d) das Anbringen der einen oder mehreren Karkassenschichten (10) um den flachen Bautrommel, wobei die eine oder mehrere angebrachte Karkassenschichten (10) zwei Randteile beidseitig des Zentralteils (20) des flachen Bautrommels enthalten, wobei jeder Karkassenschichtrandteil seinen entsprechenden Seitenwandstreifen (15) zum Teil bedeckt; wobei die eine oder mehrere Karkassenschichten (10) die Hobelstreifen (14) und die eine oder mehrere Überzugsschichten bedecken; und
e) das Anbringen jedes Wulstringes (12, 13) um seinen entsprechenden Hobelstreifen (14).

3. Verfahren nach Anspruch 1, **dadurch gekennzeichnet**, daß jedes der zwei Seitenwandstreifen (14) mit dem angrenzenden Hobelstreifen (15) verbunden ist um eine Einheit zu bilden und diese Einheit anschließend auf dem flachen Bautrommel aufgestellt wird .

4. Verfahren nach einem der vorhergehenden Ansprüche, **dadurch gekennzeichnet**, daß beiden Hobelstreifen (14), beide Seitenwandstreifen (15) und eine oder mehrere Überzugsschichten (11) verbunden sind um eine Einheit zu bilden und diese Einheit anschließend auf dem flachen Bautrommel aufgestellt wird.

5. Verfahren nach Anspruch 1, **dadurch gekennzeichnet**, daß beide Hobelstreifen (14) und eine oder mehrere Überzugsschichten (11) verbunden sind um eine Einheit zu bilden und diese Einheit anschließend auf dem flachen Bautrommel aufgestellt wird.

6. Verfahren nach Anspruch 2 oder 4, **dadurch gekennzeichnet**, daß zwischen dem Randteil jeder Überzugsschicht (11) und dem jeweiligen Seitenwandstreifen (15) eine Lücke übrigbleibt, damit der betreffende Hobelstreifen (14) ausreichend aufgedeckt ist um als solche zu arbeiten.

7. Verfahren nach Anspruch 2 oder 4, **dadurch gekennzeichnet**, daß der Randteil jeder Überzugsschicht (11) und des jeweiligen Seitenwandstreifens (15) so dicht nahe einander angebracht sind, daß der Hobelstreifen (14) als Endrand funktioniert.

8. Verfahren nach einem der vorhergehenden Ansprüche, **dadurch gekennzeichnet**, daß die Hobelstreifen (14) in einem Winkel von 45° in bezug auf den viereckigen, in Gummi eingebetteten Maschenstoff geschnitten werden.

9. Verfahren nach einem der vorhergehenden Ansprüche, **dadurch gekennzeichnet**, daß der Außmaß der Elastizität in der Länge oder Breite der Hobelstreifen (14) ausgewählt werden kann um zusätzliche enge oder breite Streifen anzubringen in dem die Hobelstreifen (14) in einem Winkel zwischen 35° bis 55° in Bezug auf den in Gummi eingebetteten Stoff mit anfänglich viereckigen Maschen geschnitten werden.

## Revendications

1. Procédé de fabrication d'une carcasse pour un pneu radial sur un tambour de fabrication plat, le tambour de fabrication comprenant une partie centrale (20), deux parties mobiles (21, 22) qui sont mobiles l'une en direction de l'autre des deux côtés de la partie centrale (20), deux parties d'extrémité coulissantes (23, 24) couplées aux parties mobiles (21, 22), toutes ces parties ayant essentiellement des surfaces cylindriques avec une ligne centrale (25) commune, et deux souffles gonflables (26, 27), chacun supporté par sa partie d'extrémité (23, 24) correspondante, et étant muni de parties de verrouillage pouvant s'étendre radialement afin de presser radialement les couches qui forment la carcasse et qui sont placées dessus, jusqu'à des bagues à talon (12, 13) prévues pour la carcasse afin de fixer les bagues à talon (12, 13), tandis que le diamètre extérieur de ces parties de verrouillage est inférieur à celui du diamètre intérieur des bagues à talon (12, 13), afin de pouvoir s'étendre, et dans lequel la carcasse se compose d'une ou plusieurs couches de revêtement (11), d'une ou plusieurs couches de carcasse (10), deux bandes de planage (14), deux bandes latérales (15) et les deux bagues à talon (12, 13), les bandes de planage (14) se composant de tissu à mailles plus ou moins carrées plongé dans du caoutchouc, caractérisé en ce que ledit procédé comprend ultérieurement les étapes consistant à :
a) placer chaque bande latérale (15) sur ses soufflets gonflables (26, 27) correspondants, chaque bande latérale (15) placée comprenant des première et seconde parties formant bord, ladite première partie formant bord latéral étant située plus près de la partie centrale (20) du tambour de fabrication plat que la seconde partie formant bord latéral ;
b) placer chaque bande de planage (14) sur sa bande latérale (15) et ses soufflets gonflables (26, 27) correspondants, chaque bande de planage (14) placée comprenant des première et seconde parties formant bord, ladite première partie formant bord de bande de planage étant située plus près de la partie centrale (20) du tambour de fabrication plat que la seconde partie formant bord de bande de planage, la seconde partie formant bord de bande de planage de chaque bande de planage (14) recouvrant la première partie formant bord latéral de sa bande latérale (15) correspondante ;
c) placer une ou plusieurs couches de revêtement (11) autour du tambour de fabrication plat, ladite ou lesdites couches de revêtement (11) placées comprenant deux parties formant bord des deux côtés de la partie centrale (20) du tambour de fabrication plat, chaque partie formant bord de couche de revêtement recouvrant sa bande de planage (14) correspondante au moins sur sa première partie formant bord de bande de planage ; ladite ou lesdites couches de revêtement (11) recouvrant les parties mobiles (21, 22) et centrale (20) du tambour de fabrication plat ;
d) placer une ou plusieurs couches de carcasse (10) autour du tambour de fabrication plat, ladite couche ou lesdites plusieurs couches de carcasse (10) placées comprenant deux parties formant bord des deux côtés de la partie centrale (20) du tambour de fabrication plat, chaque partie formant bord de couche de carcasse recouvrant partiellement sa bande latérale (15) correspondante ; ladite couche ou lesdites plusieurs couches de carcasse (10) recouvrant les bandes de planage (14) et une ou plusieurs couches de revêtement (11) ; et
e) placer chaque bague à talon (12, 13) autour de sa bande de planage (14) correspondante.

2. Procédé pour fabriquer une carcasse pour un pneu radial sur un tambour de fabrication plat, le tambour de fabrication comprenant une partie centrale (20), deux parties mobiles (21, 22) qui sont mobiles l'une vers l'autre des deux côtés de la partie centrale (20), deux parties d'extrémité (23, 24) coulissantes couplées aux parties mobiles (21, 22), toutes ces parties ayant des surfaces essentiellement cylindriques avec une ligne centrale (25) commune, et deux soufflets gonflables (26, 27) supportés chacun par sa partie d'extrémité (23, 24) correspondante, et étant muni de parties de verrouillage pouvant s'étendre radialement afin de presser radialement les couches qui forment la carcasse et qui sont placées dessus, jusqu'à des bagues à talon (12, 13) prévues pour la carcasse afin de fixer les bagues à talon (12, 13), tandis que le diamètre extérieur de ces parties de verrouillage est inférieur à celui du diamètre intérieur des bagues à talon (12, 13), afin de pouvoir s'étendre, et dans lequel la carcasse se compose d'une ou plusieurs couches de revêtement (11), d'une ou plusieurs couches de carcasse (10), deux bandes de planage (14), deux bandes latérales (15) et les deux bagues à talon (12, 13), les bandes de planage (14) se composant de tissu à mailles plus ou moins carrées plongé dans du caoutchouc, caractérisé en ce que ledit procédé comprend ultérieurement les étapes consistant à :
a) placer chaque bande latérale (15) sur ses soufflets gonflables (26, 27) correspondants, chaque bande latérale (15) placée comprenant des première et seconde parties formant bord, ladite première partie formant bord latéral étant située plus près de la partie (20) du tambour de fabrication plat que la seconde partie formant bord latéral ;
b) placer une ou plusieurs couches de revêtement (11) entre les bandes latérales (15) sur les parties centrale (20) et mobiles (21, 22) du tambour de fabrication plat, ladite couche ou lesdites plusieurs couches de revêtement (11) placées comprenant deux parties formant bord des deux côtés de la partie centrale (20) du tambour de fabrication plat, chaque partie formant bord de couche de revêtement étant espacée de sa bande latérale correspondante ;
c) placer chaque bande de planage (14) sur sa bande latérale (15) et ses soufflets gonflables (26, 27) correspondants, chaque bande de planage (14) placée comprenant des première et seconde parties formant bord, ladite première partie formant bord de bande de planage étant située plus près de la partie centrale (20) du tambour de fabrication plat que la seconde partie formant bord de bande de planage, la seconde partie formant bord de bande de planage (14) recouvrant la première partie formant bord latéral de sa bande latérale (15) correspondante ; la première partie formant bord de bande de planage recouvrant sa partie formant bord de couche de revêtement ;
d) placer une ou plusieurs couches de carcasse (10) autour du tambour de fabrication plat, ladite couche ou lesdites plusieurs couches de carcasse (10) placées comprenant deux parties formant bord des deux côtés de la partie centrale (20) du tambour de fabrication plat, chaque partie formant bord de couche de carcasse recouvrant partiellement sa bande latérale (15) correspondante ; ladite couche ou lesdites plusieurs couches de carcasse (10) recouvrant les bandes de planage (14) et une ou plusieurs couches de revêtement (11) ; et
e) placer chaque bague à talon (12, 13) autour de sa bande de planage correspondante (14).

3. Procédé selon la revendication 1, caractérisé en ce que chacune des deux bandes latérales (14) est combinée à la bande de planage adjacente (15) pour former une unité et cette unité est ultérieurement agencée sur le tambour de fabrication plat.

4. Procédé selon l'une quelconque des revendications précédentes, caractérisé en ce que les deux bandes de planage (14), les deux bandes latérales (15) et une ou plusieurs couches de revêtement (11) sont combinées pour former une unité et cette unité est alors agencée sur le tambour de fabrication plat.

5. Procédé selon la revendication 1, caractérisé en ce que les deux bandes de planage (14) et une ou plusieurs bandes de revêtement (11) sont combinées pour former une unité et cette unité est ultérieurement agencée sur le tambour de fabrication plat.

6. Procédé selon la revendication 2 ou 4, caractérisé en ce que, entre la partie formant bord de chaque couche de revêtement (11) et la bande latérale (15) respective, un espace est laissé, de telle sorte que la bande de planage (14) en question est suffisamment exposée pour fonctionner en tant que telle.

7. Procédé selon la revendication 2 ou 4, caractérisé en ce que la partie formant bord de chaque couche de revêtement (11) et de la bande latérale (15) respective sont placées si près l'une de l'autre que la bande de planage (14) fonctionne comme un bord de finition.

8. Procédé selon l'une quelconque des revendications précédentes, caractérisé en ce que les bandes de planage (14) sont coupées selon un angle de 45° par rapport au tissu à mailles plus ou moins carrées plongé dans du caoutchouc.

9. Procédé selon l'une quelconque des revendications précédentes, caractérisé en ce que la proportion d'élasticité dans la longueur ou la largeur des bandes de planage (14) peut être sélectionnée de façon à appliquer des bandes étroites ou larges supplémentaires en coupant les bandes de planage (14) selon un angle compris dans le domaine de 35° à 55° par rapport au tissu plongé dans du caoutchouc avec des mailles initialement plus ou moins carrées.
